# EUROPEAN PATENT SPECIFICATION

(11) **EP 0 896 167 B1**
(45) Date of publication and mention of the grant of the patent: **10.03.2004**
(21) Application number: 98113531.2
(22) Date of filing: 20.07.1998
(51) Int. Cl.: F16D 51/20, F16D 65/08, F16D 65/56

(54) **Drum Brake Device**
Trommelbremsvorrichtung
Dispositif de frein à tambour

(30) Priority: 05.08.1997 JP 22318797
(43) Date of publication of application: 10.02.1999
(73) Proprietor: Nisshinbo Industries, Inc., Chuo-ku, Tokyo 103-0013 (JP)
(72) Inventor: Asai, Seiji, Okazaki-shi, Aichi 444-0856 (JP); Ikeda, Takashi, c/o Nisshinbo Ind. Inc. Nagoya, Nagoya-shi, Aichi 457-0841 (JP); Kobayashi, Yasushi, c/o Nisshinbo Ind. Inc. Nagoya, Nagoya-shi, Aichi 457-0841 (JP)
(74) Representative: Meissner, Bolte & Partner

(56) References cited:
- EP-A- 0 286 254
- US-A- 4 981 200
- US-E- R E22 586

## Description

The present invention relates to a drum brake device, in particular a dual mode drum brake device, enabling a smooth return of the brake shoe when the parking brake is released.

A dual mode drum brake device that functions as a leading-trailing type or LT type when the service brake is applied and as a duo-servo type or DS type when the parking brake is applied is disclosed, for example, in US-A-5,275,260 and AU-B1-53 491/79.

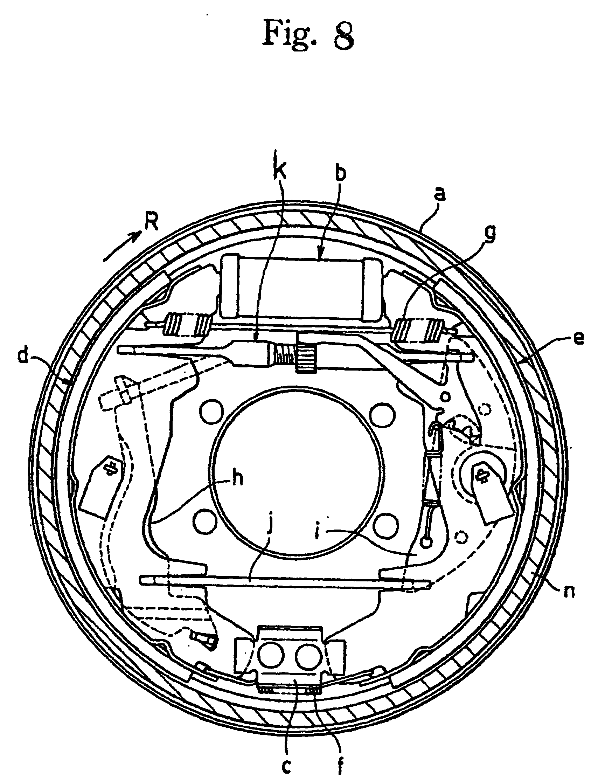

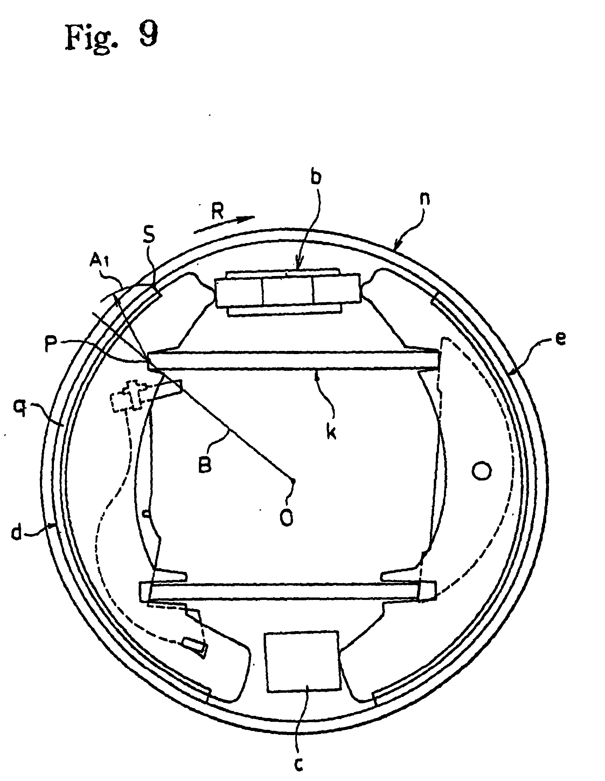

Such a conventional device is explained below with reference to Fig. 8 and Fig. 9 of the drawings. A wheel cylinder **b** and an anchor block **c** are provided on the upper and lower parts of a back plate **a**. The upper ends and the lower ends of a pair of brake shoes **d** and **e** engage with the wheel cylinder **b** and the anchor block **c**, respectively.

Shoe return springs **f** and **g** extend between the lower ends of the brake shoes **d** and **e**, and between the upper ends of the brake shoes **d** and **e,** respectively. A parking brake lever h is pivotably provided at the lower part of the brake shoe **d** at the left side in the arrangement according to Fig. 8. The central region of a pivot lever **i** is pivoted so as to swing on the central region of the brake shoe **e** at the right side in Fig. 8. A rod **j** bridges between the brake shoes **d** and **e** adjacent to the anchor block **c**. In Fig. 8, the left end of the rod **j** engages with the brake shoe **d** and the parking brake lever **h**, while the right end of the rod **j** engages with the lower parts of the brake shoe **e** and the lower end of the pivot lever **i**.
A screw type shoe clearance adjustment device **k** is provided between the brake shoes **d** and **e** adjacent to the wheel cylinder **b**. In Fig. 8, the left end of the shoe clearance adjustment device **k** engages with the upper parts of the brake shoe **d** while the right end of the shoe clearance adjustment device **k** engages with the upper part of the brake shoe **e** and the upper end of the pivot lever **i**.

The drum brake device explained above functions as an LT type brake where both brake shoes **d** and **e** spread open with the point of abutment with the anchor block **c** as the fulcrum when the wheel cylinder **b** is operated in order to activate the service brake.

When the parking brake is operated, the rotating force of the parking brake lever **h** is transmitted to the rod **j**, the pivot lever **i**, and the shoe clearance adjustment device **k** in the given order, and the brake shoe **d** at the left side rotates with the point of abutment with the anchor block **c** as the fulcrum and frictionally engages with a brake drum **n**.

The pivot lever **i** rotates with the point of abutment with the shoe clearance adjustment device **k** as the fulcrum, and then the brake shoe **e** at the right side pivotably supporting the pivot lever **i** rotates to frictionally engage with the brake drum **n**. The reaction force of the parking brake lever **h** affects the lower end of the brake shoe **d** at the left side in Fig. 8.

Furthermore, if a rotational force in the direction of an arrow R is applied to the brake drum **n** when a vehicle is stopped on a downhill or an uphill slope, the frictional force of the brake shoe d at the left side in Fig. 8 is transmitted via the shoe clearance adjustment device **k** as the force needed to move the brake shoe **e** at the right side in Fig. 8.

In addition, when the rotational force is applied in the direction opposite of the arrow R, the frictional force of the brake shoe **e** at the right side in Fig. 8 is transmitted via the shoe clearance adjustment device **k** to the brake shoe **d** at the left side. Accordingly, this drum brake device functions as a DS type brake when the parking brake is in operation.

Generally, when a vehicle is stopped on a slope, the vehicle is stopped by the service brake first, then the parking brake is operated while the service brake is in operation, and thereafter the service brake is released. When the service brake is released after setting the parking brake for example, the brake drum **n** slightly rotates with the wheel in the direction of the arrow R due to gravity, which generates the braking force.

Very often, when a vehicle is starting on a slope, the driver starts the vehicle moving, especially a vehicle with an automatic transmission, while releasing the parking brake without applying on the service brake.

At this time, if the vehicle is moving to rotate the brake drum **n** in the direction opposite of the arrow R, the brake shoe **d** turns with the brake drum n until contacting the anchor block **c**, and the brake shoe **d** smoothly returns to the starting position by the return spring force without any problem.

However, if the vehicle is moving to rotate the brake drum n in the direction of the arrow R, one brake shoe **d** may cause dragging or biting. That is, as shown in Fig. 9, the shoe clearance adjustment device **k** becomes a prop, and the circumferential edge S of the lining **q** on the brake shoe **d** is located closer to the wheel cylinder **b** side than a normal, radial line B passing through a point of abutment P of the shoe clearance adjustment device **k** with the brake shoe **d** to the brake center O.

Therefore, the circumferential edge S of the lining **q** is pressed along a track A1, that is, in the direction of the frictional surface of the brake drum **n**, with the point of abutment P as the fulcrum by the force of the return spring **g**, which may cause dragging and brake locking.

Also, when the vehicle is moving to rotate the brake drum **n** in the direction opposite to the arrow R in the condition that the brake shoe **d** abuts against the anchor block **c** and the brake shoe **e** separates from the anchor block **c** with the parking brake in operation, the same type of problem described above clearly arises with respect to the other brake shoe **e**.

The aim of the present invention is to resolve the problems discussed above, and hence, the object underlying the present invention is to provide a drum brake device which is capable of realizing a smooth return of the brake shoe whenever the parking brake is released.

According to the invention, this problem is solved in an advantageous and satisfying manner. According to the invention, a drum brake device is provided comprising: a back plate; two brake shoes set to face each other on the back plate; a service brake actuator activated by a service brake mounted on the back plate between one pair of first adjacent ends of the brake shoes; an anchor mounted on the back plate between another pair of second adjacent ends of the brake shoes; a shoe clearance adjustment device provided adjacent to the service brake actuator and provided between the brake shoes; a parking brake actuator activated by a parking brake provided adjacent to the anchor; linings provided on the respective two brake shoes; and a pivot lever pivotably mounted at the central region of one brake shoe, one end of the pivot lever and another end of the pivot lever respectively being functionally engaged with the shoe clearance adjustment device and the parking brake actuator.

In the drum brake device according to the present invention, a circumferential edge of each lining of the respective brake shoe at the service brake actuator nearest the first adjacent ends side is located on the normal radial line passing through a point of abutment of the respective brake shoe with the automatic shoe clearance adjustment device and the brake center or at a point closer to the anchor than that normal radial line.

According to a further development of the drum brake device of the present invention, a chamfer is formed at the respective end of the lining at the circumferential end.

Further objects, features and advantages of the present invention will become readily apparent from the following description of preferred embodiments when considered in conjunction with the accompanying drawings wherein:
- Fig. 1: is a plan view of a first embodiment of a drum brake device according to the present invention;
- Fig. 2: is an enlarged plan view of the parts adjacent to a service brake actuator of the drum brake device in Fig. 1;
- Fig. 3: is a cross-section view taken along the line III-III in Fig. 2;
- Fig. 4: is a cross-section view taken along the line IV-IV in Fig. 2;
- Fig. 5: is a cross-section view taken along the line V-V in Fig. 1;
- Fig. 6: is an operation model view explaining the operation when releasing the parking brake of the drum brake device according to the invention;

- Fig. 7: is a plan view of chamfers formed on the ends of the linings of the brake shoes in accordance with a second embodiment of the drum brake according to the invention;
- Fig. 8: is a plan view of a conventional drum brake device; and
- Fig. 9: is an operation model view explaining the operation of the construction according to Fig. 8 when releasing the parking brake of the drum brake device.

### First Embodiment

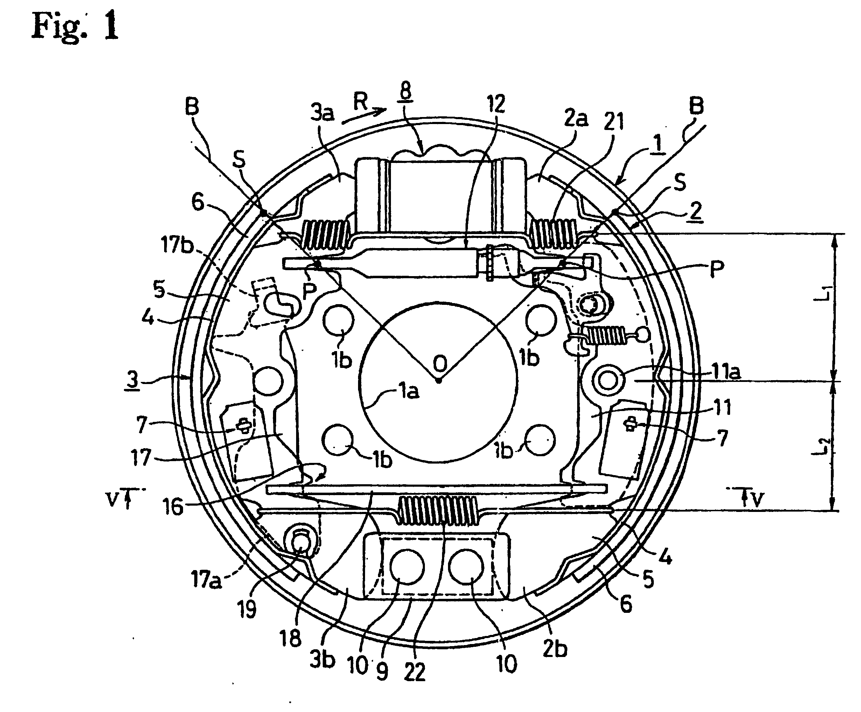

A first embodiment of the invention will now be explained with reference to Fig. 1 to Fig. 5 of the drawings.

As shown in Fig. 1, a center hole 1a of a back plate 1 is to be fitted over the vehicle axle with a gap and is affixed to a stationary part of the vehicle by bolts through a plurality of bolt holes 1b.

A pair of brake shoes 2, 3 comprises shoe webs 5 fixed on the inner surface of curved shoe rims 4, so as to form a T-shaped section in cross-section. Linings 6 are fixed on the outer surfaces of the shoe rims 4. The linings 6 frictionally engage with a brake drum, not shown in the drawings, to brake the brake drum. The brake shoes 2, 3 are elastically supported on the back plate 1 by conventional shoe hold devices 7 comprising a conventional plate spring and pin.

The fixing points of the linings 6 of the brake shoes 2 and 3 at the side of a service brake actuator 8, i.e. the points of circumferential edges S of the linings 6, are located on normal, radial lines B passing through a point of abutment P of the brake shoes 2 and 3 with the shoe clearance adjustment device 12 and the brake center O, or the points of the circumferential edges S are located closer to an anchor 9 than the lines B.

Strictly speaking, the points of the circumferential edges S are to be measured when the parking brake is in operation; the amount of displacement, however, does not need to be considered since it is too small. This provides a smooth return of the brake shoes 2 and 3 to prevent any dragging of the brake shoes 2 and 3, and to prevent the brake shoes 2 and 3 from being locked.

The service brake actuator 8 is a fluid pressure type or an air pressure type cylinder, which is activated when the service brake is operated. The service brake actuator 8 is provided between the adjacent ends 2a and 3a of the brake shoes 2 and 3, facing each other, and is mounted on the back plate 1 by bolts etc..

The anchor 9 is affixed on the back plate 1 by rivets 10 and supports the other adjacent ends 2b and 3b of the brake shoes 2 and 3. The anchor 9 may be affixed by welding instead of using rivets 10 and a pin-shaped anchor pin may be used instead of a rectangular plate.

The drum brake device is equipped with a pivot lever 11 in order to transmit a frictional force that occurs at each of the brake shoes 2 and 3, respectively, to the remaining brake shoes 3 and 2, respectively, during parking brake operation.

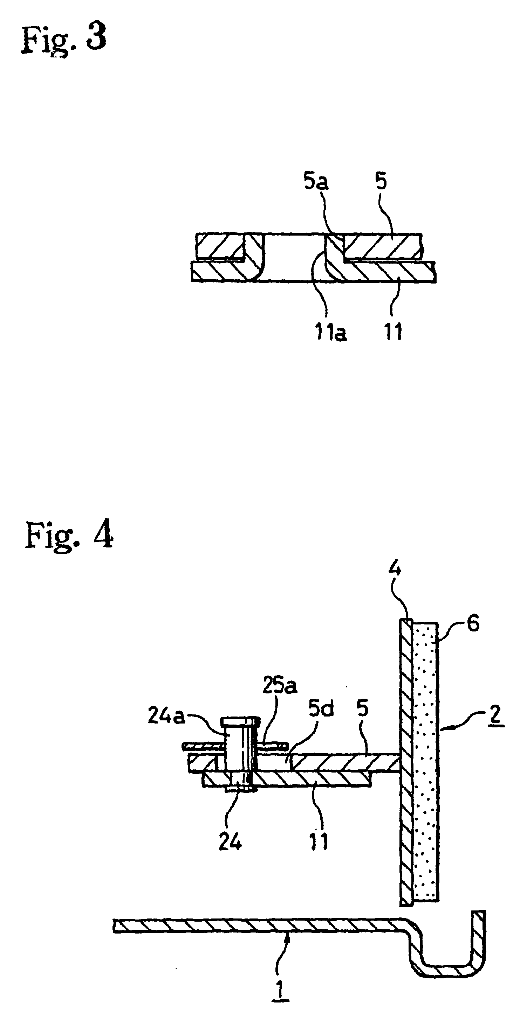

The pivot lever 11 is placed at the back of the shoe web 5 of the brake shoe 2 at the right side in Fig. 1. A protuberance 11a formed at the central region of the pivot lever 11 is pivotably inserted into a hole 5a of the shoe web 5 as can be seen in Fig. 3. Alternatively, another pin may easily be used for the pivot lever 11 to pivotably be supported on the shoe web 5 instead of the above-described structure of using the protuberance 11a and the hole 5a.

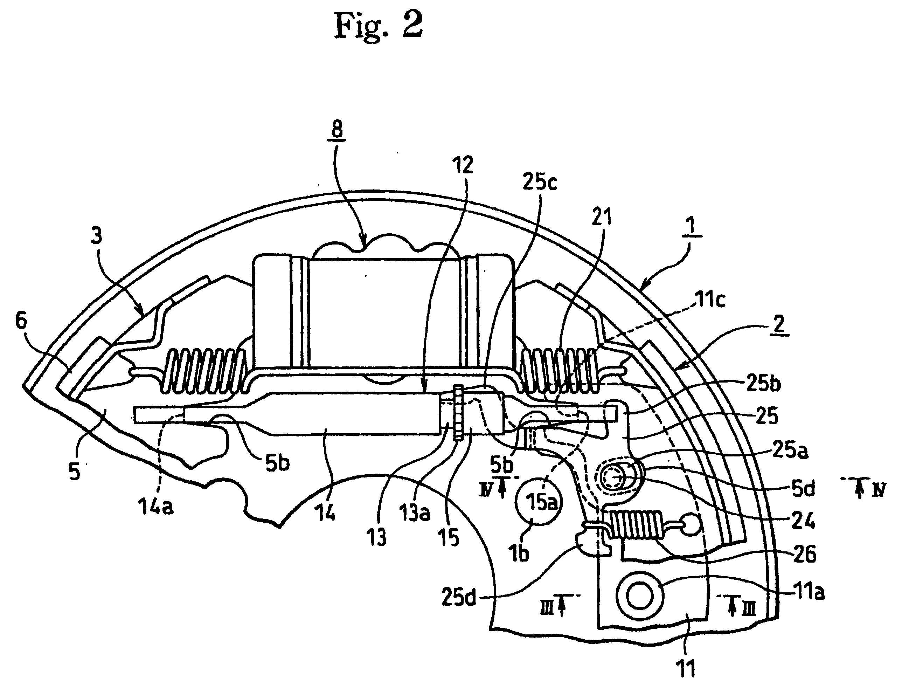

Adjacent to the service brake actuator 8, the shoe clearance adjustment device 12 is provided between the brake shoes 2 and 3. As shown in Fig. 2, the shoe clearance adjustment device 12 is a conventional screw type adjustment device for adjusting the clearance between the brake drum, not shown in the drawing, and the brake shoes 2 and 3.

The shoe clearance adjustment device 12 comprises a bolt 13 with a toothed adjuster 13a, a tube 14 threadingly fitting on one end of the bolt 13, and a socket 15 rotatably fitting with the other end of the bolt 13. When inserting a tool, such as a screwdriver through a hole, not shown in the drawing, formed in the back plate 1 or in the brake drum, the entire length of the shoe clearance adjustment device 12 may be adjusted by screwing the bolt 13 with the toothed adjuster 13a in order to screw the part of the bolt 13 out from or into the tube 14.

One end of each above-described tube 14 and socket 15 are pressed to form plate-shaped ends. The ends each have a notched groove 14a and 15a, respectively. The bottom of the notched groove 14a abuts against a notched groove 5b formed at the shoe web 5 of the other brake shoe 3.

The bottom of the notched groove 15a abuts against a notched groove 5b formed at the shoe web 5 on the one brake shoe 2. A slight clearance is provided between the bottom of a notched groove 11c formed at one end of the pivot lever 11 and the bottom of the notched groove 15a in consideration of manufacturing tolerances.

An incremental type automatic shoe clearance adjustment device, activating when the service brake is in operation, is explained below with reference to Figs. 2 and 4. A pin 24 fixed at one side of the pivot lever 11 is vertically set to freely protrude through a long hole 5d of the shoe web 5 of the one brake shoe 2. A stem 24a of the pin 24 pivotably supports an adjustment lever 25 via a hole 25a formed at the central region of the adjustment lever 25.

An arm 25b of the adjustment lever 25 abuts against a stepped surface of the notched groove 15a of the socket 15. Another arm 25c of the adjustment lever 25 engages with the toothed adjuster 13a of the bolt 13. An adjustment spring 26 is extended between a further arm 25d and the shoe web 5 and provides the adjustment lever 25 with a counter-clockwise spring force with the pin 24 as the fulcrum.

As shown in Fig. 1, a parking brake actuator 16, activated when the parking brake is operated, is provided adjacent to the anchor 9. The parking brake actuator 16 comprises a forward-pull type brake lever 17 and a strut 18 etc. as conventionally known.

The brake lever 17 is mounted at the back of the shoe web 5 of the brake shoe 3. A basal part 17a of the brake lever 17 is pivotably supported by a pin 19 at the other end 3b of the brake shoe 3. A U-shaped bent groove is formed at a free end 17b of the brake lever 17 to hold a parking brake cable, not shown in the drawings.

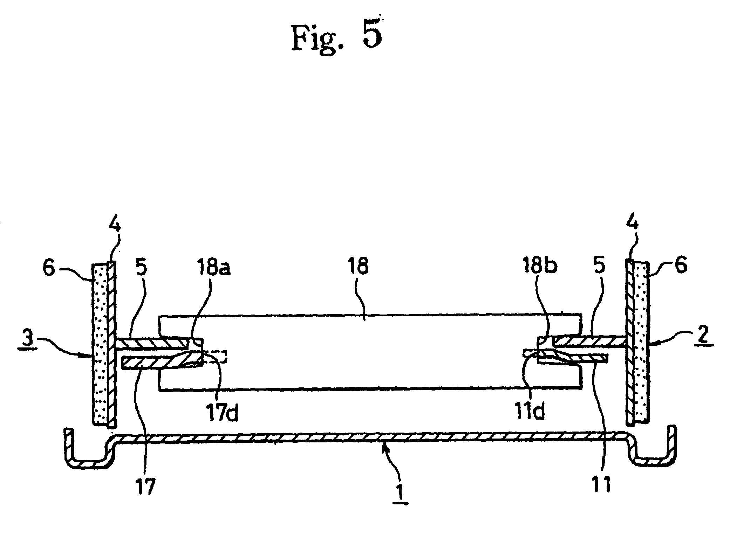

As shown in Fig. 5, notched grooves 18a and 18b are formed at the ends of the plate-shaped strut 18. The bottom of the notched groove 18a abuts against the bottom of a notched groove 17d of the brake lever 17 urged there by the spring force of the adjustment spring 26. The bottom of the notched groove 18b abuts against the bottom of a notched groove 11d formed at the other end of the pivot lever 11.

In the above-described structure, as both brake shoes 2 and 3 spread open by operating the service brake, the shoe clearance adjustment device 12 follows the other brake shoe 3. The pivot lever 11 follows one brake shoe 2, and at that time, the pivot lever 11 rotates clockwise in Fig. 1 by the spring force of the adjustment spring 26 with the protuberance 11a as the fulcrum. Accordingly, the adjustment lever 25 rotates counter-clockwise in Fig. 1 to the amount of the rotation of the pin 24 plus the amount of the movement of the shoe clearance adjustment device 12.

At this time, if the linings 6 are worn down and the amount of rotation of the arm 25c of the adjustment lever 25 exceeds a pitch between two adjacent teeth of the toothed adjuster 13a, the bolt 13 is screwed out from the tube 14 in order to maintain a constant clearance between the brake drum, not shown in the drawing, and the linings 6.

Also, when the parking brake is in operation, the shoe clearance adjustment device 12, the pivot lever 11, the adjustment lever 25 etc. follow together to the amount of opening of the other brake shoe 3, and therefore the parking brake operation does not effect an automatic adjustment operation.

As shown in Fig. 1, return springs 21 and 22 are extended between the upper sides of the brake shoes 2 and 3 as well as between the lower sides of the brake shows 2 and 3. Even if the brake lever 17 is set to be pulled slightly, the moment at the lower return spring 22 side is larger than the moment at the upper return spring 21 side, so that the lower end 2b of the brake shoe 2 is not detached from the anchor 9 when the brake is inactive.

That is, provided that the mounting load of the upper return spring 21 is F1, the mounting load of the lower return spring 22 is F2, the length from the pivot point between the brake shoe 2 and the pivot lever 11 to the upper return spring 21 is L1, and the length from the pivot point between the brake shoe 2 and the pivot lever 11 to the lower return spring 22 is L2, the device is to be structured to set the moment effecting on the brake shoe 2 to be F1 x L1 < F2 x L2.

The operation of the drum brake device described above will be explained below.

When a pressure is applied to the service brake actuator 8, both brake shoes 2 and 3 spread open with the point of abutment with the anchor 9 as the fulcrum. The linings 6 frictionally engage with the rotating brake drum, not shown in the drawings, thereby braking the brake drum. At this time, one of the brake shoes 2 or 3 functions as a self-servo, and the other of the brake shoes 3 or 2 functions as a non-servo, thereby having the drum brake device functioning as an LT type brake.

During operation of the parking brake, as shown in Fig. 1, the free end 17b of the brake lever 17 is pulled to the right through a parking brake cable, not shown in the drawings. Then, the brake lever 17 rotates clockwise with the pin 19 as the fulcrum, and the rotating force of the brake lever 17 is transmitted to the strut 18, the pivot lever 11, and the shoe clearance adjustment device 12, in that order. Accordingly, the other brake shoe 3 rotates with the point of abutment with the anchor 9 as the fulcrum and frictionally engages with the brake drum, not shown in the drawings.

Then, the pivot lever 11 rotates counter-clockwise with the point of abutment with the shoe clearance adjustment device 12 as the fulcrum, and the operating force is transmitted to the brake shoe 2 via the protuberance 11a of the pivot lever 11. Therefore, the brake shoe 2 rotates with the point of abutment with the anchor 9 as the fulcrum to frictionally engage with the brake drum. Also, the reaction force affects the lower end of the brake shoe 3 via the pin 19.

At this point, when the vehicle is stopping on an uphill or a downhill slope, as the rotating force in the direction of the arrow R is applied to the brake drum, the frictional force of the other brake shoe 3 is transmitted to the one brake shoe 2 as an opening force via the shoe clearance adjustment device 12.

When the rotating force is applied in the direction opposite to the arrow R, the frictional force of the one brake shoe 2 is transmitted to the other brake shoe 3 via the shoe clearance adjustment device 12. Accordingly, when the parking brake is in operation, both brake shoes 2 and 3 have a self-servo effect, thereby functioning as a DS type brake.

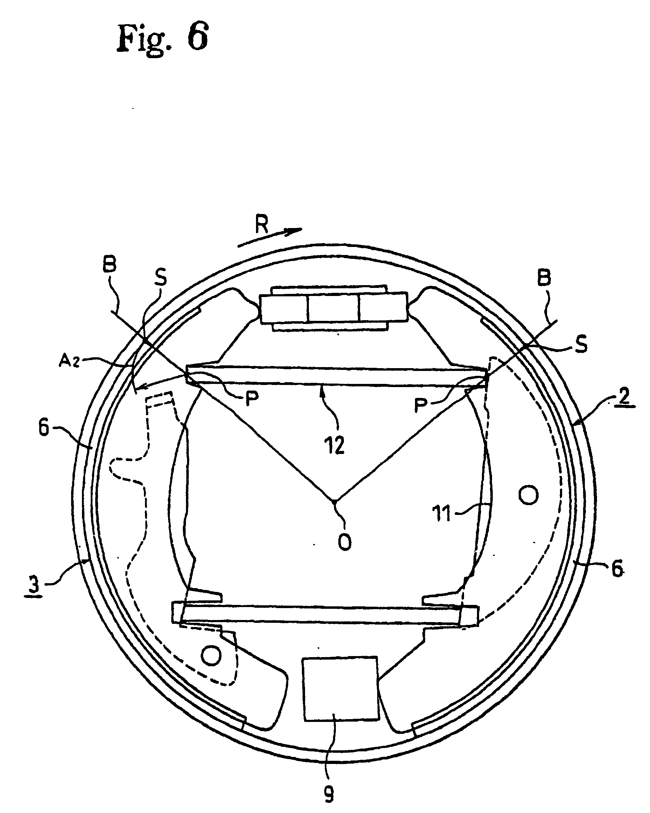

In Fig. 6, an operation model is disclosed, which explains the operation of the drum brake device in which the parking brake is released without applying the service brake in the condition that the vehicle is stopping on a slope.

When a vehicle begins to move after releasing the parking brake and the brake drum rotates in the direction of the arrow R, the point of the circumferential edge S of the lining 6 of the other brake shoe 3 is located on the line B passing through the point of abutment P of the shoe clearance adjustment device 12 with the brake shoe 3 and the brake center O or is located closer to the anchor 9 than the line B.

As a result, the point of the circumferential edge S of the lining 6 of the other brake shoe 3, due to the return spring force, smoothly moves along a track A2, or, in other words, smoothly moves in a direction to detach from the frictional surface of the brake drum, with the point of abutment P as the fulcrum. This almost returns the device to the starting position which is the same as prior to the braking operation.

Therefore, the drum brake device according to the present invention prevents any brake shoe dragging and prevents the brake shoe from being locked in the same manner as it is experienced in the conventional devices.

Also, when a vehicle begins to move after releasing the parking brake and the brake drum rotates in the direction opposite of the arrow R, the other brake shoe 3 returns together with the brake drum until contacting the anchor 9 due to the return spring force to smoothly return to the starting position.

In addition, even if the vehicle is moving and the brake drum rotates in the direction opposite of the arrow R in a condition where the brake shoe 3 abuts against the anchor 9 and the brake shoe 2 separates from the anchor 9 with the parking brake in operation, the same effects as described above can obviously be obtained. Therefore, a detailed explanation is omitted here.

### Second Embodiment

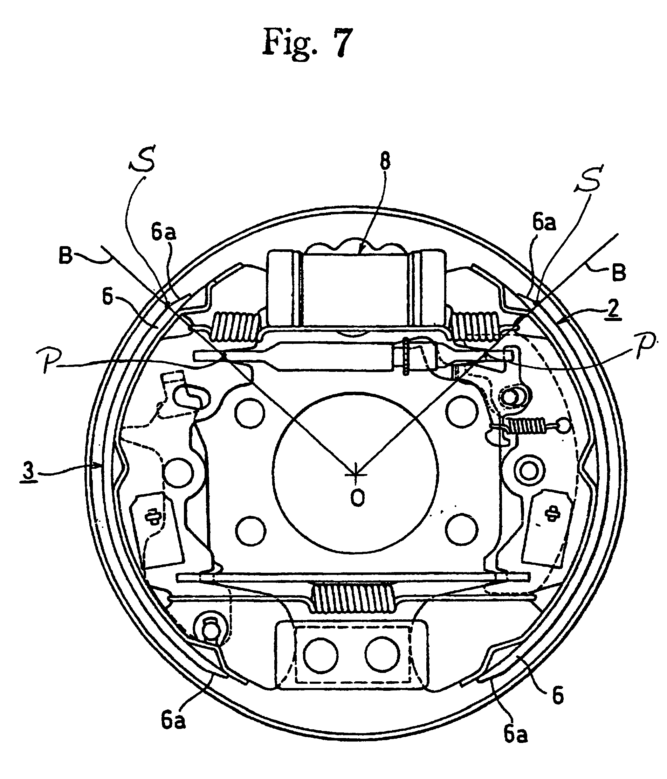

As shown in Fig. 7 of the drawings, chamfers 6a may be formed at the ends of the linings 6 of the respective brake shoes 2 and 3.

The fixing positions of the linings 6 of the brake shoes 2 and 3 at the side of the service brake actuator 8, i.e. the points of the circumferential edges S of the ends of the linings 6 are set to be on the above-mentioned line B or closer to the anchor 9 than the line B, where the same explanation as in the first embodiment is applicable.

In this embodiment, the forming of chamfers 6a at the ends of the linings 6 avoids the edges being caught on the brake drum, thereby facilitating the influence of a stick-slip, which improves the problem of brake judder and brake noise by smoothing the contact with the brake drum.

### Third Embodiment

The embodiments described above deal with a drum brake device having an incremental type automatic adjustment system, where the shoe clearance adjustment device 12 automatically adjusts the clearance between the lining 6 of the brake shoes 2 and 3, respectively, and the brake drum. However, the automatic adjustment system is not limited to this type, and the invention may also be operated with a manual adjustment system instead of the automatic system.

In addition, a cross-pull type parking brake may be used in the parking brake system of the drum brake device.

Moreover, the embodiments described above disclose a drum brake device where the moment of the return springs 21 and 22 effecting on the brake shoe 2 is set to establish a certain relation with other parts. However, this invention is not limited to such an embodiment, and the device is applicable as long as the drum brake device is functioning as a leading-trailing type or LT type when the service brake is in operation, and as a duo-servo type or DS type when the parking brake is in operation.

Taking account of the above detailed description, it is apparent that the invention achieves the following advantageous effects.
(A) The point of the circumferential edge of the lining of the respective brake shoe at the side of the service brake is placed on the normal, radial line passing through the point of abutment of the shoe clearance adjustment device with the brake shoe and the brake center or is placed closer to the anchor than that normal, radial line. This realizes a smooth return of the brake shoe when releasing the parking brake on a slope in the condition that the vehicle is stopping, thereby preventing any dragging and preventing the brake shoe from being locked.
(B) The invention has the further advantage in that it is applicable to a variety of shoe clearance adjustment devices and parking brake systems.
(C) Chamfers formed on the ends of the lining may avoid that the edges being caught on the brake drum so that the lining contacts the brake drum smoothly, which facilitates the influence of a stick-slip; therefore, problems of brake judder and brake noise are eliminated or at least reduced.

It is readily apparent that the drum brake device described above has the advantage of wide commercial utility. It should be understood that the specific form of the invention described above is intended to be representative only without any restriction, since certain modifications within the scope of these teachings will be readily apparent to those skilled in the art.

## Claims

1. A drum brake device comprising
- a back plate (1);
- two brake shoes (2, 3) set to face each other on the back plate (1);
- a service brake actuator (8) to be activated by a service brake mounted on the back plate (1) between one pair of first adjacent ends (2a, 3a) of the brake shoes (2, 3);
- an anchor (9) mounted on the back plate (1) between another pair of second adjacent ends (2b, 3b) of the brake shoes (2, 3);
- a shoe clearance adjustment device (12) provided adjacent to the service brake actuator (8) and provided between the brake shoes (2, 3);
- a parking brake actuator (16) adapated to be activated by a parking brake provided adjacent to the anchor (9);
- linings (6) provided on the respective two brake shoes (2, 3); and
- a pivot lever (11) pivotably mounted at the central region of one brake shoe (2), one end of the pivot lever (11) and another end of the pivot lever (11) respectively being functionally engaged with the shoe clearance adjustment device (12) and the parking brake actuator (16),
wherein a circumferential edge (S) of each lining (6) of the respective brake shoe (2, 3) at the service brake actuator (8) side nearest the first adjacent ends (2a, 3a) is located on a normal, radial line (B) passing through a point of abutment (P) of the respective brake shoe (2, 3) with the automatic shoe clearance adjustment device (12) and the brake center (O) or at a point closer to the anchor (9) than the normal, radial line (B).

2. The drum brake device according to claim 1,
wherein a chamfer (6a) is formed at the respective end of the lining (6) at the circumferential end.

## Patentansprüche

1. Trommelbremsenvorrichtung, die folgendes aufweist:
- eine Rückplatte (1);
- zwei Bremsbacken (2, 3), die so angebracht sind, daß sie sich auf der Rückplatte (1) gegenüberliegen;
- ein Betriebsbremsen-Betätigungsorgan (8), das über eine Betriebsbremse aktivierbar ist und auf der Rückplatte (1) zwischen einem Paar von ersten benachbarter Enden (2a, 3a) der Bremsbacken (2, 3) angebracht ist;
- einen Anker (9), der an der Rückplatte (1) zwischen einem anderen Paar von zweiten benachbarten Enden (2b, 3b) der Bremsbacken (2, 3) angebracht ist;
- eine Backenabstands-Einstellvorrichtung (12), die benachbart zu dem Betriebsbremsen-Betätigungsorgan (8) und zwischen den Bremsbakken (2, 3) vorgesehen ist;
- ein Feststellbremsen-Betätigungsorgan (16), das so ausgelegt ist, daß es über eine Feststellbremse betätigbar und benachbart dem Anker (9) vorgesehen ist;
- Bremsbeläge (6), die auf den jeweiligen zwei Bremsbacken (2, 3) vorgesehen sind; und
- einen Drehhebel (11), der drehbar in dem zentralen Bereich der einen Bremsbacke (2) befestigt ist, wobei das eine Ende des Drehhebels (11) und ein anderes Ende des Drehhebels (11) jeweils funktionsmäßig mit der Backenabstands-Einstellvorrichtung (12) und dem Feststellbremsen-Betätigungsorgan (16) in Eingriff stehen,
wobei eine Umfangskante (S) von jedem Bremsbelag (6) der jeweiligen Bremsbacke (2, 3) an der Seite des Betriebsbremsen-Betätigungsorgans (8), die den ersten benachbarten Enden (2a, 3a) am nächsten liegt, auf einer normalen, radialen Linie (B) angeordnet ist, die durch einen Anschlagpunkt (P) von der jeweiligen Bremsbacke (2, 3) mit der automatischen Backenabstand-Einstellvorrichtung (12) und einen Bremsenmittelpunkt (O) verläuft oder an einem Punkt, der näher an dem Anker (9) liegt als die normale, radiale Linie (B).

2. Trommelbremsenvorrichtung nach Anspruch 1,
wobei eine Abschrägung (6a) an dem jeweiligen Ende des Bremsbelages (6) an dem umfangsmäßigen Ende ausgebildet ist.

## Revendications

1. Frein à tambour, comprenant :
-- une plaque de support (1) ;
-- deux mâchoires de frein (2, 3) placées l'une en face de t'autre sur la plaque de support (1) ;
-- un actionneur de frein de service (8) destiné à être activé par un frein de service et monté sur la plaque de support (1) entre une paire de premières extrémités adjacentes (2a, 3a) des mâchoires de frein (2, 3) ;
-- un ancrage (9) monté sur la plaque de support (1) entre une autre paire de secondes extrémités adjacentes (2b, 3b) des mâchoires de frein (2, 3) ;
-- un dispositif d'ajustement du jeu des mâchoires (12) prévu adjacent à l'actionneur de frein de service (8) et disposé entre les mâchoires de frein (2, 3) ;
-- un actionneur de frein de stationnement (16) adapté à être activé par un frein de stationnement et prévu adjacent à l'ancrage (9) ;
-- des garnitures (6) prévues sur les deux mâchoires de frein respectives (2, 3) ; et
-- un levier pivotant (11) monté en pivotement au niveau de la région centrale d'une mâchoire frein (2), une extrémité du levier de pivotement (11) et une autre extrémité du levier de pivotement (11) respectivement étant fonctionnellement en engagement avec le dispositif d'ajustement du jeu des mâchoires (12) et avec l'actionneur de frein de stationnement (16),
dans lequel une bordure circonférentielle (S) de chaque garniture (6) de la mâchoire de frein respective (2, 3) du côté de l'actionneur de frein de service (8) le plus proche des premières extrémités adjacentes (2a, 3a) est située sur une ligne normale radiale (B) qui passe par un point de butée (P) de la mâchoire de frein respective (2, 3) avec le dispositif d'ajustement automatique (12) du jeu des mâchoires et le centre du frein (O), ou à un point plus proche de l'ancrage (9) que la ligne normale radiale (B).

2. Frein à tambour selon la revendication 1, dans lequel un chanfrein (6a) est formé à l'extrémité respective de la garniture (6) à l'extrémité circonférentielle.
